# FASCICULE DE BREVET EUROPEEN

(11) **EP 4 493 446 B1**
(45) Date de publication et mention de la délivrance du brevet: **01.10.2025**
(21) Numéro de dépôt: 23736328.8
(22) Date de dépôt: 29.06.2023
(51) Int. Cl.: B62J 1/08

(54) **ENSEMBLE DE TIGE DE SELLE**
SATTELSTÜTZENANORDNUNG
SEAT POST ASSEMBLY

(30) Priorité: 29.06.2022 FR 2206572
(43) Date de publication de la demande: 22.01.2025
(73) Titulaire: Bastille Cycles, 75016 Paris (FR)
(72) Inventeur: HENRY, Gilles, 75016 Paris (FR)
(74) Mandataire: Osha BWB
(86) Numéro de dépôt international: PCT/EP2023/067893
(87) Numéro de publication internationale: WO 2024/003293

(56) Documents cités:
- WO-A2-2006/039195
- DE-A1- 102008 059 894
- FR-A1- 3 009 269
- FR-A1- 3 027 279

## Description

### Domaine technique

L'invention concerne un ensemble de tige de selle. Cet ensemble peut être monté, notamment, sur une bicyclette.

Plus précisément, l'invention concerne un ensemble de tige de selle équipé d'un système de blocage permettant de changer et de fixer la hauteur de la tige de selle.

### Arrière-plan

De nombreux systèmes de blocage pour tige de selle de vélo existent.

Un système de blocage utilisé pour les tiges de selle de vélo (mais également pour les tiges de guidon) comprend une tringle s'étendant à l'intérieur de la tige de selle et une cale reliée à la tringle. La tringle est mobile entre une position basse dans laquelle la cale ne s'oppose pas au coulissement de la tige de selle à l'intérieur du tube de selle qui l'entoure, et une position haute dans laquelle la cale s'oppose au coulissement et bloque la tige de selle en position. Un exemple de système de ce type est décrit dans le document de brevet FR 2432424. Un tel système de blocage est apprécié pour sa robustesse et sa fiabilité. Cependant, les manipulations requises pour bloquer et débloquer ce système ne sont pas aisées et nécessitent souvent des outils. Cet inconvénient est acceptable lorsque la hauteur de la tige de selle est réglée à la taille de son unique utilisateur une bonne fois pour toutes. En revanche, cet inconvénient devient vite gênant lorsque la hauteur de la tige de selle doit être réglée fréquemment, comme c'est le cas pour un vélo partagé entre plusieurs utilisateurs. Cet inconvénient devient également gênant lorsque la tige de selle doit être fréquemment rentrée au maximum à l'intérieur du tube de selle pour diminuer l'encombrement du vélo, comme c'est le cas pour la plupart des vélos Par ailleurs, le document DE 10 2008 059894 A1 divulgue les caractéristiques du préambule de la revendication 1.

Il existe donc un besoin pour un système de blocage de tige de selle qui soit simple à manipuler et ne requiert pas d'outil.

### Présentation générale

Un ensemble de tige de selle selon l'invention comprend :
- une tige de selle adaptée pour être montée coulissante dans un tube de selle,
- une tringle s'étendant à l'intérieur de la tige de selle, la tringle étant mobile par rapport à la tige de selle entre une position basse et une position haute,
- une base fixée à l'extrémité supérieure de la tige de selle,
- un support de selle sur lequel une selle peut être fixée, le support de selle étant monté sur la base, et
- un système de blocage actionnable entre une position déverrouillée dans laquelle le système de blocage n'empêche pas le coulissement de la tige de selle à l'intérieur du tube de selle, et une position verrouillée dans laquelle le système de blocage empêche le coulissement et bloque la tige de selle en position à l'intérieur du tube de selle.

Le système de blocage est actionné par le mouvement de la tringle entre ses positions haute et basse.

Le support de selle est monté rotatif sur la base, autour d'un premier axe, et relié à la tringle de sorte que la rotation du support de selle autour du premier axe entraine la tringle entre ses positions haute et basse.

Ainsi, lorsqu'une selle est fixée sur le support de selle, il suffit à l'utilisateur de faire pivoter la selle, et avec elle le support de selle, autour du premier axe pour verrouiller et déverrouiller le système de blocage. La manipulation requise est donc particulièrement aisée.

Dans certains modes de réalisation, le support de selle est relié à la tringle par un levier monté pivotant sur la base autour d'un deuxième axe, un premier bras du levier s'étendant d'un côté du deuxième axe et étant relié à la tringle de manière à entrainer la tringle entre ses positions haute et basse, et un deuxième bras du levier s'étendant de l'autre côté du deuxième axe et étant entrainé en rotation autour du deuxième axe par la rotation du support de selle autour du premier axe. Cette liaison par levier présente l'avantage d'être simple et robuste. De plus, en jouant sur la longueur des bras du levier, le levier permet d'amplifier l'effort exercé par l'utilisateur. Ainsi, un effort modéré suffit pour entraîner la tringle entre ses positions haute et basse et, donc, pour verrouiller et déverrouiller le système de blocage.

L'invention a également pour objet un véhicule comprenant l'ensemble de tige de selle précédemment défini, un cadre avec un tube de selle dans lequel la tige de selle est montée coulissante, et une selle fixée sur le support de selle. Ce véhicule peut être un vélo ou tout autre véhicule équipé d'une selle.

Les caractéristiques et avantages précités, ainsi que d'autres, apparaîtront à la lecture de la description détaillée qui suit. Cette description détaillée fait référence aux dessins annexés.

### Brève description des dessins

Les dessins annexés sont schématiques et ne sont pas nécessairement à l'échelle, ils visent avant tout à illustrer les principes de l'invention. Sur ces dessins, d'une figure (fig) à l'autre, des éléments (ou parties d'élément) identiques sont repérés par les mêmes signes de référence.
[Fig.1] Cette figure représente un exemple d'ensemble de tige de selle comprenant un système de blocage pour bloquer la tige de selle en position à l'intérieur d'un tube de selle.
[Fig.2] Cette figure est une vue éclatée de l'ensemble de tige de selle de la [Fig.1].
[Fig.3] Cette figure est une vue en coupe axiale de l'ensemble de tige de selle de la [Fig.1]. La tige de selle est engagée dans un tube de selle et équipée d'une selle. La selle est dans sa position d'utilisation, la face supérieure de la selle étant sensiblement horizontale.
[Fig.4] Cette figure est une vue en coupe analogue à celle de la [Fig.3], dans laquelle la selle est dressée vers le haut, la face supérieure de la selle étant proche de la verticale.
[Fig.5] Cette figure est une vue en coupe analogue à celle de la [Fig.3], dans laquelle la selle est basculée vers l'arrière. La selle est renversée, sa face supérieure tournée vers le bas.
[Fig.6] Cette figure est une vue de détail d'un autre exemple de système de blocage.
[Fig.7] Cette figure est une vue éclatée du système de blocage de la [Fig.6].
[Fig.8] Cette figure est une vue en coupe axiale du système de blocage de la [Fig.6] en position déverrouillée.
[Fig.9] Cette figure est une vue en coupe axiale du système de blocage de la [Fig.6] en position verrouillée

### Description détaillée

Des modes de réalisation particuliers de l'ensemble de tige de selle proposé sont décrits en détail ci-après, en référence aux exemples représentés sur les dessins annexés. Ces modes de réalisation illustrent les caractéristiques et les avantages de l'invention. Il est toutefois rappelé que l'invention ne se limite pas à ces modes de réalisation.

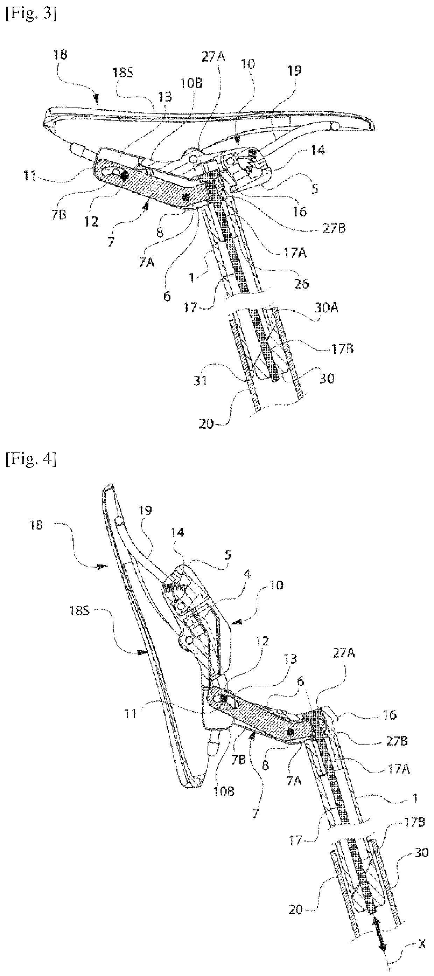

Dans certains modes de réalisation, comme dans l'exemple représenté sur les figures, l'ensemble de tige de selle comprend une tige de selle 1 adaptée pour être montée coulissante dans un tube de selle 20. L'extrémité supérieure 1A de tige de selle 1 porte un support de selle 10 sur lequel est fixée une selle 18. La [Fig.3] représente la selle 18 dans sa position d'utilisation. Dans cette position, l'utilisateur s'assoit sur la face supérieure 18S de la selle 18.

Dans la présente demande, l'horizontale et la verticale sont définis par rapport à la position d'utilisation de la selle 18, représentée sur la [Fig.3]. La face supérieure 18S de la selle est sensiblement horizontale dans cette position d'utilisation. Le haut et le bas sont définis par rapport à la direction verticale. L'avant et l'arrière sont définis par rapport à la direction horizontale et à la position normale de l'utilisateur sur la selle 18, l'utilisateur regardant vers l'avant.

Dans l'exemple des figures, la selle 18 comprend des rails de fixation 19 sur sa face inférieure. Ces rails 19 s'étendent dans le sens de la longueur de la selle 18. Les rails 19 sont retenus dans des mâchoires 4 prévues de part et d'autre du support de selle 10. Ces mâchoires 4 sont serrées autour des rails 19 au moyen d'une vis 3. Ce système de fixation répond aux standards actuels de sorte que la plupart des selles à rails disponibles dans le commerce peuvent être fixées sur le support de selle 10. Bien entendu, d'autres systèmes de fixation peuvent être envisagés pour fixer la selle 18 sur le support de selle 10.

L'ensemble de tige de selle comprend, en outre, un système de blocage 2 pour bloquer la tige de selle 1 en position à l'intérieur d'un tube de selle 20 et une tringle 17 s'étendant à l'intérieur de la tige de selle 1et reliée au système de blocage 2.

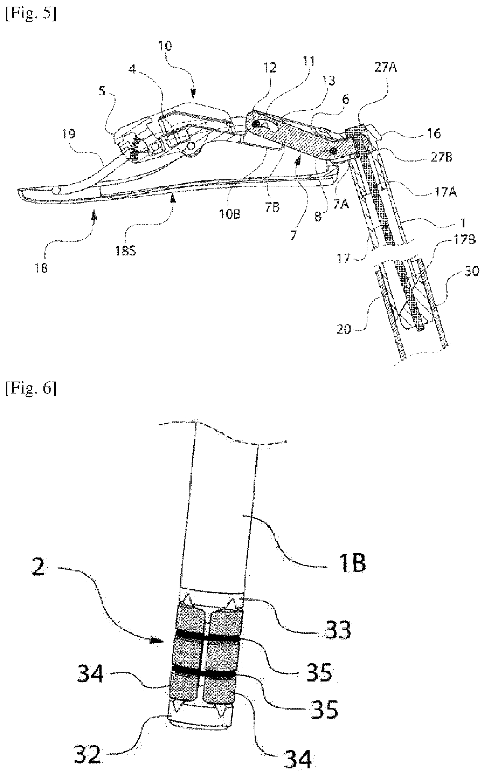

La tringle 17 est mobile par rapport à la tige de selle 1 entre une position basse, illustrée sur la [Fig.4], et une position haute illustrée sur les figures 3 et 5.

Le système de blocage 2 est actionné par le mouvement de la tringle 17 entre ses positions haute et basse. Le système de blocage 2 est actionnable entre une position déverrouillée dans laquelle le système de blocage n'empêche pas le coulissement de la tige de selle 1 à l'intérieur du tube de selle 20, et une position verrouillée dans laquelle le système de blocage empêche le coulissement et bloque la tige de selle 1 en position à l'intérieur du tube de selle 20.

Dans l'exemple, lorsque la tringle 17 est en position basse, le système de blocage 2 est en position déverrouillée et n'empêche pas le coulissement de la tige de selle 1 à l'intérieur du tube de selle 20. Et lorsque la tringle 17 est en position haute, le système de blocage 2 est en position verrouillée et empêche le coulissement et bloque la tige de selle 1 en position à l'intérieur du tube de selle 20. Les positions haute et basse de la tringle 17 correspondent donc, respectivement, aux positions déverrouillée et verrouillée du système de blocage 2. Une correspondance inverse pourrait toutefois être envisagée sans sortir du cadre de l'invention.

Dans certains modes de réalisation, comme dans l'exemple représenté sur les figures, la tringle 17 traverse la tige de selle 1 et l'extrémité inférieure 17B de la tringle 17 s'étend au-delà de l'extrémité inférieure 1B de la tige de selle 1. Le système de blocage 2 est fixé à l'extrémité inférieure 17B de la tringle 17 de sorte que la tringle 17 entraine une partie du système de blocage 2 dans son mouvement de manière à actionner le système de blocage 2.

Dans certains modes de réalisation, le système de blocage 2 comprend une cale 30 et l'extrémité inférieure 1B de la tige de selle 1 est biseautée suivant un plan incliné 31 formant un angle non-nul avec à un plan orthogonal à l'axe principal X de la tige de selle 1. Par exemple, un angle compris entre 30 et 60°. La cale 30 est portée par la tringle 17 et présente une surface inclinée 30A faisant face au plan incliné 31. Lorsque la tringle 17 passe de sa position basse à sa position haute, la tringle 17 tire la cale 30 vers le haut de sorte que la surface inclinée 30A se plaque et glisse contre le plan incliné 31, entrainant ainsi le décalage de la cale 30 par rapport à l'axe principal X de la tige de selle 1. La cale 30 vient alors en appui contre une paroi intérieure du tube de selle 20 et pousse la tige de selle 1 contre la paroi intérieure opposée, comme illustré sur les figures 3 et 5. Les frottements générés empêchent la tige de selle 1 de coulisser à l'intérieur du tube de selle 20 et, ainsi, bloquent la tige de selle 1 en position.

Dans la présente demande, on désigne par cale, ou coin, un organe mécanique mobile susceptible d'exercer une force de blocage dans un ensemble de pièces afin de bloquer le mouvement relatif entre ces pièces. Ici, la cale 30 permet de bloquer le mouvement relatif entre la tige de selle 1 et le tube de selle 20.

Un autre exemple de système de blocage 2 est décrit plus loin, en référence aux figures 6 à 9. Ces exemples de système de blocage 2 présentent l'avantage d'être robustes et fiables. En particulier, ils sont plus fiables que les systèmes utilisant un collier pour enserrer le tube de selle et le plaquer contre la tige de selle.

L'ensemble de tige de selle comprend, en outre, une base 6 fixée à l'extrémité supérieure 1A de la tige de selle 1. Dans l'exemple, la base 6 comprend un manchon 26 engagé et fixé dans l'extrémité supérieure 1A de la tige de selle 1. Le support de selle 10 est monté rotatif sur la base 6, autour d'un premier axe 11, et relié à la tringle 17 de sorte que la rotation du support de selle 10 autour du premier axe 11 entraine la tringle 17 entre ses positions haute et basse.

Dans certains modes de réalisation, comme dans l'exemple des figures, la partie supérieure de la base 6 s'étend vers l'arrière à partir de la tige de selle 1, i.e. à partir du manchon 26. La partie supérieure de la base 6 présente une paroi avant formant ou portant un crochet 16 et deux parois latérales se terminant, vers l'arrière, par deux bras 6A. La partie supérieure de la base 6 est creuse et dépourvue de paroi inférieure et de paroi arrière.

La partie arrière 10B du support de selle 10 est montée rotative entre les deux bras 6A, autour du premier axe 11. De cette manière, le support de selle 10 peut décrire un mouvement de rotation relatif par rapport à la base 6.

Dans l'exemple, le premier axe 11 est un axe de rotation matérialisé par deux vis 11A disposées suivant une même direction, en vis-à-vis. Ces vis 11A sont vissées dans les bras 6A depuis l'extérieur. Elles traversent l'épaisseur des bras 6A et se logent dans un trou cylindrique traversant la partie arrière 10B du support de selle 10. Les vis forment ensemble un arbre (en deux parties) sur lequel le support de selle 10 prend appui pour pivoter.

D'autres configurations peuvent bien entendu être envisagées pour réaliser l'articulation entre support de selle 10 et la base 6. Par exemple, deux broches peuvent s'étendre de part et d'autre de la partie arrière 10B du support de selle 10 et être supportées, respectivement, par deux paliers formés dans les bras 6A. Selon un autre exemple, le premier axe de rotation 11 peut être un arbre (en une seule pièce) traversant le support de selle 10 et les bras 6A.

Selon un autre exemple, le premier axe de rotation 11 n'est matérialisé par aucune pièce et n'est qu'une ligne droite fictive autour de laquelle s'effectue le mouvement de rotation. Dans ce dernier cas, l'articulation entre support de selle 10 et la base 6 est réalisée, par exemple, par emboitement d'une rainure circulaire dans une nervure circulaire.

Dans certains modes de réalisation, le support de selle 10 est relié à la tringle 17 au moyen d'un levier 7 monté pivotant sur la base 6 autour d'un deuxième axe 8. Le levier 7 comprend deux bras s'étendant de part et d'autre du deuxième axe 8. Le premier bras 7A du levier s'étend d'un côté du deuxième axe 8 et est relié à la tringle 17 de manière à entrainer la tringle 17 entre ses positions haute et basse. Le deuxième bras 7B du levier s'étend de l'autre côté du deuxième axe 8 et est entrainé en rotation autour du deuxième axe 8 par la rotation du support de selle 10 autour du premier axe 11.

Dans l'exemple, le deuxième axe 8 est un axe de rotation matérialisé par un arbre traversant le levier 7 et supporté par deux paliers formés dans les parois latérales de la base 6. D'autres configurations peuvent toutefois être envisagées pour l'articulation du levier 7. Par exemple, le deuxième axe de rotation 8 peut être formé par deux broches s'étendant de part et d'autre du levier 7. Le levier 7 peut être percé d'un perçage 9 au travers duquel le deuxième axe 8 peut passer.

Dans certains modes de réalisation, le premier bras 7A du levier est plus long que le deuxième bras 7B. En outre, le levier 7 peut présenter une forme coudée, le deuxième axe 8 se situant au niveau du coude du levier 7.

Dans certains modes de réalisation, le levier 7 est logé à l'intérieur de la base 6, entre les parois latérales (i.e. entre les bras 6A) de la base 6. De même, l'extrémité supérieure 17A est logée à l'intérieur de la base 6, la tringle 17 traversant le manchon 26. Le mécanisme du système de blocage est ainsi protégé des chocs extérieurs. Il est également hors de portée pour l'utilisateur, ce qui permet d'éviter les risques de pincement.

Dans certains modes de réalisation, l'extrémité supérieure 17A de la tringle 17 traverse le premier bras 7A du levier 7 et présente, de part et d'autre du premier bras 7A, une butée supérieure 27A et une butée inférieure 27B, le premier bras 7A étant contre la butée supérieure 27A en position haute de la tringle 17 et contre la butée inférieure 27B en position basse de la tringle 17. En d'autres termes, lorsque le premier bras 7A se lève, il vient en butée contre la butée supérieure 27A et tire la tige 27 vers le haut. Inversement, lorsque le premier bras 7A se baisse, il vient en butée contre la butée inférieure 27B et pousse la tige 27 vers le bas. Dans l'exemple des figures, les butées 27A, 27B ont la forme de collerettes et l'extrémité du premier bras 7A forme une fourche. Cette fourche est engagée autour de la tige 27, entre les butées 27A, 27B.

Dans certains modes de réalisation, comme dans l'exemple représenté sur les figures, le support de selle 10 est mobile en rotation autour du premier axe 11 entre trois positions, à savoir:
- une position d'appui correspondant à la position d'utilisation de la selle 18, dans laquelle le support de selle 10 est à l'endroit, en appui sur la base 6;
- une position renversée dans laquelle le support de selle 10 est basculé vers l'arrière de la base 6; et
- une position intermédiaire entre la position d'appui et la position renversée.

Ces trois positions sont représentées, respectivement, sur les figures 3, 5 et 4.

Sur la [Fig.3], le support de selle 10 est en position d'appui et la selle 18 est dans sa position d'utilisation. La face supérieure 18S de la selle est sensiblement horizontale pour permettre à un utilisateur de s'y asseoir.

Sur la [Fig.4], le support de selle 10 est en position intermédiaire et la selle 18 est dressée vers le haut, la face supérieure 18S de la selle étant proche de la verticale.

Sur la [Fig.5], le support de selle 10 est en position renversée. Le support 10 et la selle 18 sont basculés vers l'arrière. La selle est renversée, sa face supérieure 18S étant tournée vers le bas.

La tringle 17 est en position haute lorsque le support de selle 10 est dans la position d'appui ; en position basse lorsque le support de selle 10 est dans la position intermédiaire ; et à nouveau en position haute lorsque le support de selle 10 est dans la position renversée.

Dans certains modes de réalisation, le support de selle 10 (ici, la partie arrière 10B du support de selle 10) porte un pion 12. En outre, une ouverture oblongue 13 est ménagée dans le deuxième bras 7B du levier 7. L'ouverture oblongue 13 et le support de selle 10 sont configurés pour que le pion 12 se déplace dans et le long de l'ouverture oblongue 13 lors de la rotation du support de selle 10 autour du premier axe 11. Le déplacement du pion 12 dans l'ouverture oblongue 13 fait alors pivoter le levier 7 autour du deuxième axe 8, comme représenté sur les figures 3 à 5.

Le pion 12 décrit un trajet circulaire lors de la rotation du support de selle 10 autour du premier axe 11. Dans l'exemple, l'ouverture oblongue 13 est incurvée dans le même sens que le trajet circulaire, la courbure de l'ouverture oblongue 13 étant inférieure à la courbure du trajet circulaire du pion 12.

Le fonctionnement du système de blocage est décrit ci-après, en référence aux figures 3 à 5.

Lorsque le support de selle 10 est en position d'appui, le pion 12 se situe à une première extrémité de l'ouverture oblongue 13, comme représenté sur la [Fig.3]. Le deuxième bras 7B du levier 7 est alors en position basse et, inversement, le premier bras 7A est en position haute. Le premier bras 7A est en butée contre la butée supérieure 27A de la tringle 17 et tire la tringle 17 vers le haut. La tringle 17 est alors en position haute et le système de blocage 2 est verrouillé : la tige de selle 1 est bloquée en position à l'intérieur du tube de selle 20.

Dans certains modes de réalisation, pour maintenir le support de selle 10 en position d'appui, le support de selle 10 peut être équipé d'un système d'accroche permettant d'accrocher le support de selle sur la base 6. Par exemple, le support de selle 10 peut être équipé d'un crochet 5 venant s'engager avec un autre crochet 16 porté par la base 6. Le crochet 5 peut être maintenu en position engagée par un ressort de compression 14. Pour désengager le crochet 5 du crochet 16, l'utilisateur exerce sur le crochet 5 une force opposée à celle du ressort 14. Pour faciliter la manipulation, le crochet 5 peut être équipé d'une patte, ou languette, sur lequel l'utilisateur peut appuyer pour désengager, ou décrocher, le crochet 5. Le crochet 5 peut être monté rotatif sur le support de selle 10 autour d'un axe 15. Bien entendu, d'autres systèmes d'accroche peuvent être envisagés pour accrocher le support de selle 10 sur la base 6. Par exemple, le crochet 16 peut être remplacé par une ouverture ménagée dans la base 6 et dans laquelle le crochet 5 vient s'accrocher.

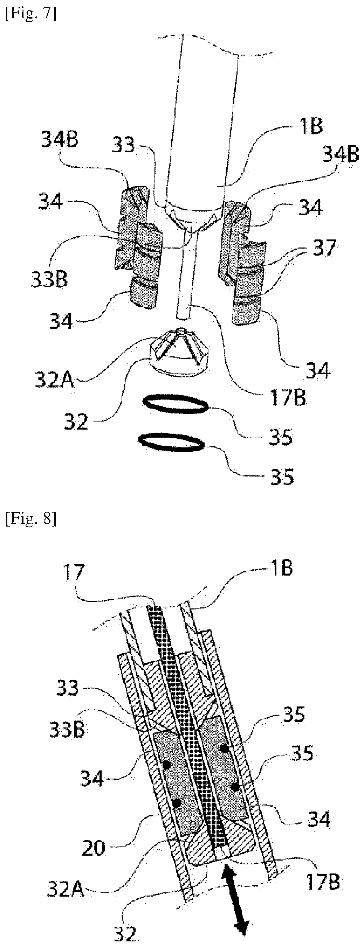

Pour déverrouiller le système de blocage 2, l'utilisateur décroche le crochet 5 et lève la selle 18 et, avec elle, le support de selle 10 jusqu'à la position intermédiaire représentée sur la [Fig.4]. Le pion 12 se déplace alors vers le milieu de l'ouverture oblongue 13, ce qui lève le deuxième bras 7B du levier 7. Le deuxième bras 7B du levier 7 est alors en position haute et, inversement, le premier bras 7A est en position basse. Le premier bras 7A vient en butée contre la butée inférieure 17B de la tringle et pousse la tringle 17 vers le bas. La tringle 17 est alors en position basse et le système de blocage 2 est déverrouillé : la tige de selle 1 est libre de coulisser à l'intérieur du tube de selle 20. Cette liberté de mouvement est schématisée par une double flèche sur les figures 4 et 8.

Dans le cas d'un vélo classique (i.e. non-pliant) et, en particulier, d'un vélo partagé entre plusieurs utilisateurs, une fois le système de blocage 2 déverrouillé, la hauteur de la selle 18 peut être réglée à la taille de son nouvel utilisateur. Une fois la hauteur de la selle 18 réglée, la selle 18 peut être rabattue vers sa position d'utilisation de la [Fig.3] de manière à verrouiller le système de blocage 2 et bloquer la selle 18 en position.

Dans le cas d'un vélo pliant, une fois le système de blocage 2 déverrouillé, la tige de selle 1 peut être rentrée (i.e. descendue) au maximum dans le tube de selle 20 pour limiter l'encombrement du vélo en position pliée. Une fois la tige de selle 1 rentrée, la selle 18 peut être rabattue vers l'avant, vers sa position d'utilisation de la [Fig.3], de manière à verrouiller le système de blocage 2 et bloquer la selle 18 en position.

En variante, la selle 18 et, avec elle, le support de selle 10, peuvent être basculés vers l'arrière, vers la position renversée de la [Fig.5]. Le pion 12 se déplace alors vers la deuxième extrémité de l'ouverture oblongue 13, ce qui rabaisse le deuxième bras 7B du levier 7. Le deuxième bras 7B du levier 7 est alors en position basse et, inversement, le premier bras 7A est en position haute. Le premier bras 7A vient en butée contre la butée supérieure 17A de la tringle et tire la tringle 17 vers le haut. La tringle 17 est alors en position haute et le système de blocage 2 est verrouillé : la tige de selle 1 est bloquée en position à l'intérieur du tube de selle 20.

La possibilité de basculer la selle 18 vers l'arrière, vers la position renversée de la [Fig.5], est optionnelle. Cette possibilité présente un avantage pour un vélo pliant, comme celui décrit dans le document de brevet EP 3634842 B1, dans lequel la selle est basculée vers l'arrière pour réduire au maximum l'encombrement du vélo plié. Voir la figure 7B du document EP 3634842 B1. Dans un tel cas, le fait que le système de blocage 2 soit verrouillé lorsque la selle 18 est dans la position renversée ([Fig.5]), permet à l'utilisateur de manipuler le vélo plié en le tenant par la selle 18 s'il le souhaite. Ceci permet également de transporter le vélo plié sans risquer de voir la tige de selle 1 sortir du tube de selle 20.

Le pion 12 et l'ouverture oblongue 13 sont un exemple de système d'entrainement du levier 7. D'autres systèmes d'entrainement peuvent être envisagés. Par exemple, dans certains modes de réalisation (non illustrés) le support de selle 10 porte une came entrainée en rotation autour du premier axe 11 par la rotation du support selle 10 autour du premier axe 11, et le deuxième bras 7B du levier 7 est plaqué contre un profil extérieur de la came. Le deuxième bras 7B est alors utilisé comme suiveur de came. La rotation de la came autour du premier axe 11 permet de lever ou d'abaisser le deuxième bras 7B du levier 7.

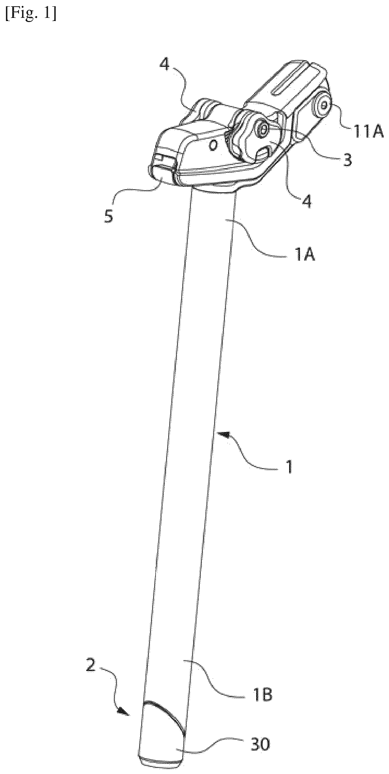

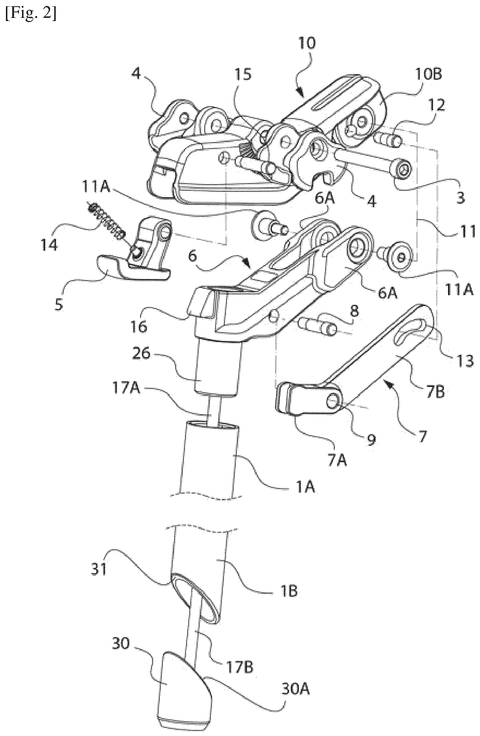

Un autre exemple de système de blocage 2 est représenté sur les figures 6 à 9. Ce système peut être utilisé à la place du système de blocage représenté sur les figures 1 et 2. Ce système de blocage 2 comprend : un cône inférieur 32 relié à l'extrémité inférieure 17B de la tringle 17 ; un cône supérieur 33 fixé à l'extrémité inférieure 1B de la tige de selle 1, les sommets des cônes inférieur et supérieur se faisant face ; et plusieurs coins 34 disposés circonférentiellement autour de la tringle 17, entre les cônes 32, 33.

Lorsque la tringle 17 passe de sa position basse à sa position haute, la tringle 17 tire le cône inférieur 32 vers le haut de sorte que les cônes inférieur et supérieur se rapprochent et serrent les coins 34 entre eux, entrainant ainsi l'écartement radial des coins 34 par rapport à la tringle 17. Les coins 34 viennent alors en appui contre une paroi intérieure du tube de selle 20. Les frottements générés empêchent la tige de selle 1 de coulisser à l'intérieur du tube de selle 20 et, ainsi, bloquent la tige de selle 1 en position.

Dans certains modes de réalisation, comme représenté sur les figures 6 à 9, le cône supérieur 33 est percé en son centre pour laisser coulisser la tringle 17.

Le cône inférieur 32 et le cône supérieur 33 présentent respectivement des surfaces inclinées 32A et 33B de forme générale conique. Les coins 34 sont biseautés dans leur partie supérieure et inférieure suivant des surfaces inclinées 34A, 34B.

Les coins 34 peuvent être maintenus entre eux et autour de la tringle 17 par des anneaux élastiques 35 qui les entourent. A cet effet, des rainures 37 peuvent être prévues sur la face extérieure des coins 34 pour recevoir les anneaux 35.

En position déverrouillée ([Fig.8]), lorsque la tringle 17 est en position basse (correspondant à la [Fig.4]), les anneaux élastiques 35 maintiennent les coins 34 proches de la tringle 17, et la tige de selle 1 est libre de coulisser à l'intérieur du tube de selle 20.

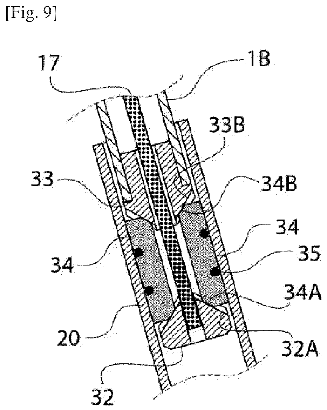

Lors du verrouillage ([Fig.9]), lorsque la tringle 17 passe de la position basse à la position haute (comme illustré dans les figures 3 et 5), le cône inférieur 32 se rapproche du cône supérieur 33. Sous l'effet des surfaces inclinées 34A et 34B venant respectivement en appui contre les surfaces inclinées 32A et 33B, les coins 34 s'éloignent radialement de la tringle 17 (i.e. suivant une direction perpendiculaire à l'axe de la tringle 17) et viennent se plaquer contre la paroi intérieure du tube de selle 20. Les frottements générés empêchent la tige de selle 1 de coulisser à l'intérieur du tube de selle 20 et, ainsi, bloquent la tige de selle 1 en position.

La face extérieure des coins 34 peut présenter, dans un plan radial, un rayon de courbure sensiblement identique au rayon de courbure de la paroi intérieure du tube de selle 20, de manière à maximiser les frottements.

La présence des rainures 37 sur la face extérieure des coins 34 permet d'éviter ou de limiter les forces de frottement au niveau des anneaux élastiques 35. L'usure des anneaux élastiques 35 s'en trouve diminuée.

Les modes de réalisation décrits dans le présent exposé sont donnés à titre illustratif et non limitatif, une personne du métier pouvant facilement, au vu de cet exposé, modifier ces modes de réalisation, ou en envisager d'autres, tout en restant dans le cadre de l'invention.

En particulier, une personne du métier pourra facilement envisager des variantes ne comprenant qu'une partie des caractéristiques des modes de réalisation précédemment décrits, si ces caractéristiques à elles seules suffisent pour procurer un des avantages de l'invention. De plus, les différentes caractéristiques de ces modes de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode de réalisation peut être appliquée de manière analogue à un autre mode de réalisation.

## Revendications

1. Ensemble de tige de selle comprenant :
une tige de selle (1) adaptée pour être montée coulissante dans un tube de selle (20),
une tringle (17) s'étendant à l'intérieur de la tige de selle (1), la tringle (17) étant mobile par rapport à la tige de selle (1) entre une position basse et une position haute,
une base (6) fixée à l'extrémité supérieure (1A) de la tige de selle (1), un support de selle (10) sur lequel une selle (18) peut être fixée, le support de selle (10) étant monté sur la base (6), et
un système de blocage (2) actionnable entre une position déverrouillée dans laquelle le système de blocage (2) n'empêche pas le coulissement de la tige de selle (1) à l'intérieur du tube de selle (20), et une position verrouillée dans laquelle le système de blocage (2) empêche le coulissement et bloque la tige de selle (1) en position à l'intérieur du tube de selle (20),
dans lequel le système de blocage (2) est actionné par le mouvement de la tringle (17) entre ses positions haute et basse, et
**caractérisé en ce que** le support de selle (10) est monté rotatif sur la base (6), autour d'un premier axe (11), et relié à la tringle (17) de sorte que la rotation du support de selle (10) autour du premier axe (11) entraine la tringle (17) entre ses positions haute et basse.

2. Ensemble de tige de selle selon la revendication 1, dans lequel le support de selle (10) est relié à la tringle (17) par un levier (7) monté pivotant sur la base (6) autour d'un deuxième axe (8), un premier bras (7A) du levier s'étendant d'un côté du deuxième axe (8) et étant relié à la tringle (17) de manière à entrainer la tringle (17) entre ses positions haute et basse, et un deuxième bras (7B) du levier s'étendant de l'autre côté du deuxième axe (8) et étant entrainé en rotation autour du deuxième axe (8) par la rotation du support selle (10) autour du premier axe (11).

3. Ensemble de tige de selle selon la revendication 2, dans lequel le support de selle (10) porte un pion (12) et dans lequel une ouverture oblongue (13) est ménagée dans le deuxième bras (7B) du levier (7), l'ouverture oblongue (13) et le support de selle (10) étant configurés pour que le pion (12) se déplace dans et le long de l'ouverture oblongue (13) lors de la rotation du support de selle (10) autour du premier axe (11), le déplacement du pion (12) dans l'ouverture oblongue (13) faisant pivoter le levier (7) autour du deuxième axe (8).

4. Ensemble de tige de selle selon la revendication 3, dans lequel le pion (12) décrit un trajet circulaire lors de la rotation du support de selle (10) autour du premier axe (11), et dans lequel l'ouverture oblongue (13) est incurvée dans le même sens que le trajet circulaire, la courbure de l'ouverture oblongue (13) étant inférieure à la courbure du trajet circulaire du pion (12).

5. Ensemble de tige de selle selon la revendication 2, dans lequel le support de selle (10) porte une came entrainée en rotation autour du premier axe (11) par la rotation du support selle (10) autour du premier axe (11), et dans lequel le deuxième bras (7B) du levier (7) est plaqué contre un profil extérieur de la came.

6. Ensemble de tige de selle selon l'une quelconque des revendications 2 à 5, dans lequel l'extrémité supérieure (17A) de la tringle (17) traverse le premier bras (7A) du levier (7) et présente, de part et d'autre du premier bras (7A), une butée supérieure (27A) et une butée inférieure (27B), le premier bras (7A) étant contre la butée supérieure (27A) en position haute de la tringle (17) et contre la butée inférieure (27B) en position basse de la tringle (17).

7. Ensemble de tige de selle selon l'une quelconque des revendications 1 à 6, dans lequel le système de blocage (2) est en position verrouillée lorsque la tringle (17) est en position haute et en position déverrouillée lorsque la tringle (17) est en position basse.

8. Ensemble de tige de selle selon la revendication 7, dans lequel le support de selle (10) est mobile en rotation autour du premier axe (11) entre trois positions, à savoir :
une position d'appui correspondant à la position d'utilisation de la selle (18), dans laquelle le support de selle (10) est à l'endroit, en appui sur la base (6) ;
une position renversée dans laquelle le support de selle (10) est basculé vers l'arrière de la base (6) ; et
une position intermédiaire entre la position d'appui et la position renversée, et
dans lequel la tringle (17) est :
en position haute lorsque le support de selle (10) est dans la position d'appui ;
en position basse lorsque le support de selle (10) est dans la position intermédiaire ; et
à nouveau en position haute lorsque le support de selle (10) est dans la position renversée.

9. Ensemble de tige de selle selon l'une quelconque des revendications 1 à 8, dans lequel le système de blocage (2) comprend:
un cône inférieur (32) relié à l'extrémité inférieure (17B) de la tringle (17);
un cône supérieur (33) fixé à l'extrémité inférieure (1B) de la tige de selle (1), les sommets des cônes inférieur et supérieur se faisant face ; et
plusieurs coins (34) disposés circonférentiellement autour de la tringle (17), entre les cônes inférieur et supérieur (32, 33),
dans lequel, lorsque la tringle (17) passe de sa position basse à sa position haute, la tringle (17) tire le cône inférieur (32) vers le haut de sorte que les cônes inférieur et supérieur se rapprochent et serrent les coins (34) entre eux, entrainant ainsi l'écartement radial des coins par rapport à la tringle (17).

10. Ensemble de tige de selle selon l'une quelconque des revendications 1 à 8, dans lequel l'extrémité inférieure (1B) de la tige de selle (1) est biseautée suivant un plan incliné (31) qui forme un angle non-nul avec à un plan orthogonal à l'axe principal (X) de la tige de selle (1), dans lequel le système de blocage (2) comprend une cale (30) présentant une surface inclinée (30A) faisant face au plan incliné (31), et dans lequel, lorsque la tringle (17) passe de sa position basse à sa position haute, la tringle (17) tire la cale (30) vers le haut de sorte que la surface inclinée (30A) est plaquée et glisse contre le plan incliné (22), entrainant ainsi le décalage de la cale (2) par rapport à l'axe principal (X) de la tige de selle (1).

11. Véhicule comprenant un ensemble de tige de selle selon l'une quelconque des revendications 1 à 10, un cadre avec un tube de selle (20) dans lequel la tige de selle (1) est montée coulissante, et une selle (18) fixée sur le support de selle (10).

## Patentansprüche

1. Sattelstützenanordnung, welche umfasst:
eine Sattelstütze (1), die dazu eingerichtet ist, verschiebbar in einem Sattelrohr (20) gelagert zu werden,
eine Stange (17), die sich im Inneren der Sattelstütze (1) erstreckt, wobei die Stange (17) in Bezug auf die Sattelstütze (1) zwischen einer niedrigen Position und einer hohen Position bewegbar ist,
eine Strebe (6), die am oberen Ende (1A) der Sattelstütze (1) befestigt ist, eine Sattelhalterung (10), auf der ein Sattel (18) befestigt werden kann, wobei die Sattelhalterung (10) auf der Strebe (6) angebracht ist, und
ein Blockiersystem (2), das zwischen einer entriegelten Position, in der das Blockiersystem (2) die Verschiebung der Sattelstütze (1) im Inneren des Sattelrohres (20) nicht verhindert, und einer verriegelten Position, in der das Blockiersystem (2) die Verschiebung verhindert und die Sattelstütze (1) in ihrer Position im Inneren des Sattelrohres (20) blockiert, betätigbar ist,
wobei das Blockiersystem (2) durch die Bewegung der Stange (17) zwischen ihrer hohen und ihrer niedrigen Position betätigt wird,
**dadurch gekennzeichnet, dass**
die Sattelhalterung (10) auf der Strebe (6) drehbar gelagert ist,
um eine erste Achse (11), und mit der Stange (17) verbunden ist, derart, dass die Drehung der Sattelhalterung (10) um die erste Achse (11) die Stange (17) zwischen ihrer hohen und ihrer niedrigen Position antreibt.

2. Sattelstützenanordnung nach Anspruch 1, wobei die Sattelhalterung (10) mit der Stange (17) durch einen Hebel (7) verbunden ist, der an der Strebe (6) um eine zweite Achse (8) schwenkbar gelagert ist, wobei sich ein erster Arm (7A) des Hebels auf einer Seite der zweiten Achse (8) erstreckt und mit der Stange (17) so verbunden ist, dass er die Stange (17) zwischen ihrer hohen und ihrer niedrigen Position bewegt, und wobei sich ein zweiter Arm (7B) des Hebels auf der anderen Seite der zweiten Achse (8) erstreckt und durch die Drehung der Sattelhalterung (10) um die erste Achse (11) um die zweite Achse (8) drehend angetrieben wird.

3. Sattelstützenanordnung nach Anspruch 2, wobei die Sattelhalterung (10) einen Stift (12) trägt und wobei eine längliche Öffnung (13) im zweiten Arm (7B) des Hebels (7) ausgebildet ist, wobei die längliche Öffnung (13) und die Sattelhalterung (10) dafür ausgelegt sind, dass sich der Stift (12) während der Drehung der Sattelhalterung (10) um die erste Achse (11) in und entlang der länglichen Öffnung (13) verlagert, wobei die Verlagerung des Stiftes (12) in der länglichen Öffnung (13) bewirkt, dass der Hebel (7) um die zweite Achse (8) schwenkt.

4. Sattelstützenanordnung nach Anspruch 3, wobei der Stift (12) während der Drehung der Sattelhalterung (10) um die erste Achse (11) einer kreisförmigen Trajektorie folgt und wobei die längliche Öffnung (13) in derselben Richtung wie die kreisförmige Trajektorie gekrümmt ist, wobei die Krümmung der länglichen Öffnung (13) kleiner als die Krümmung der kreisförmigen Trajektorie des Stiftes (12) ist.

5. Sattelstützenanordnung nach Anspruch 2, wobei die Sattelhalterung (10) einen Nocken trägt, der durch die Drehung der Sattelhalterung (10) um die erste Achse (11) drehend um die erste Achse (11) angetrieben wird, und wobei der zweite Arm (7B) des Hebels (7) an ein äußeres Profil des Nockens angedrückt wird.

6. Sattelstützenanordnung nach einem der Ansprüche 2 bis 5, wobei das obere Ende (17A) der Stange (17) den ersten Arm (7A) des Hebels (7) durchquert und beiderseits des ersten Armes (7A) einen oberen Anschlag (27A) und einen unteren Anschlag (27B) aufweist, wobei der erste Arm (7A) in der hohen Position der Stange (17) am oberen Anschlag (27A) und in der niedrigen Position der Stange (17) am unteren Anschlag (27B) anliegt.

7. Sattelstützenanordnung nach einem der Ansprüche 1 bis 6, wobei sich das Blockiersystem (2) in der verriegelten Position befindet, wenn sich die Stange (17) in der hohen Position befindet, und in der entriegelten Position, wenn sich die Stange (17) in der niedrigen Position befindet.

8. Sattelstützenanordnung nach Anspruch 7, wobei die Sattelhalterung (10) um die erste Achse (11) drehbeweglich zwischen drei Positionen ist, nämlich:
einer der Verwendungsposition des Sattels (18) entsprechenden Anlageposition, in der sich die Sattelhalterung (10) an der Stelle befindet, wo sie an der Strebe (6) anliegt;
einer umgekehrten Position, in der die Sattelhalterung (10) zur Rückseite der Strebe (6) gekippt ist; und
einer Zwischenposition zwischen der Anlageposition und der umgekehrten Position, und wobei die Stange (17):
sich in der hohen Position befindet, wenn sich die Sattelhalterung (10) in der Anlageposition befindet;
sich in der niedrigen Position befindet, wenn sich die Sattelhalterung (10) in der Zwischenposition befindet; und
sich erneut in der hohen Position befindet, wenn sich die Sattelhalterung (10) in der umgekehrten Position befindet.

9. Sattelstützenanordnung nach einem der Ansprüche 1 bis 8, wobei das Blockiersystem (2) umfasst:
einen unteren Kegel (32), der mit dem unteren Ende (17B) der Stange (17) verbunden ist;
einen oberen Kegel (33), der am unteren Ende (1B) der Sattelstütze (1) befestigt ist, wobei die Spitzen des unteren und des oberen Kegels einander zugewandt sind; und
mehrere Keile (34), die zwischen dem oberen und dem unteren Kegel (32, 33) in Umfangsrichtung um die Stange (17) herum angeordnet sind,
wobei, wenn sich die Stange (17) von ihrer niedrigen Position zu ihrer hohen Position bewegt, die Stange (17) den unteren Kegel (32) nach oben zieht, so dass der untere und der obere Kegel sich einander nähern und die Keile (34) zwischen sich festspannen, wobei sie so bewirken, dass sich die Keile von der Stange (17) radial entfernen.

10. Sattelstützenanordnung nach einem der Ansprüche 1 bis 8, wobei das untere Ende (1B) der Sattelstütze (1) entlang einer geneigten Ebene (31) abgeschrägt ist, die einen von null verschiedenen Winkel mit einer zur Hauptachse (X) der Sattelstütze (1) orthogonalen Ebene bildet, wobei das Blockiersystem (2) einen Klotz (30) umfasst, der eine der geneigten Ebene (31) zugewandte geneigte Fläche (30A) aufweist, und wobei, wenn sich die Stange (17) von ihrer niedrigen Position zu ihrer hohen Position bewegt, die Stange (17) den Klotz (30) nach oben zieht, so dass die geneigte Fläche (30A) an die geneigte Ebene (22) angedrückt wird und auf ihr gleitet, wobei sie so die Verlagerung des Klotzes (2) in Bezug auf die Hauptachse (X) der Sattelstütze (1) bewirkt.

11. Fahrzeug, welches eine Sattelstützenanordnung nach einem der Ansprüche 1 bis 10, einen Rahmen mit einem Sattelrohr (20), in dem die Sattelstütze (1) verschiebbar gelagert ist, und einen auf der Sattelhalterung (10) befestigten Sattel (18) umfasst.

## Claims

1. A seat post assembly comprising:
a seat post (1) adapted to be slidably mounted in a seat tube (20),
a link rod (17) extending inside the seat post (1), the link rod (17) being movable with respect to the seat post (1) between a low position and a high position,
a base (6) fastened to the upper end (1A) of the seat post (1),
a seat support (10) to which a saddle (18) may be fastened, the seat support (10) being mounted on the base (6), and
a blocking system (2) that is able to be actuated between an unlocked position in which the blocking system (2) does not prevent the sliding of the seat post (1) inside the seat tube (20), and a locked position in which the blocking system (2) prevents the sliding and blocks the seat post (1) in position inside the seat tube (20),
wherein the blocking system (2) is actuated by the movement of the link rod (17) between its high and low positions, and
**characterized in that**
the seat support (10) is rotatably mounted on the base (6), about a first axis (11), and
connected to the link rod (17) such that the rotation of the seat support (10) about the first axis (11) drives the link rod (17) between its high and low positions.

2. The seat post assembly as claimed in claim 1, wherein the seat support (10) is connected to the link rod (17) by a lever (7) pivotably mounted on the base (6) about a second axis (8), a first arm (7A) of the lever (7) extending on one side of the second axis (8) and being connected to the link rod (17) so as to drive the link rod (17) between its high and low positions, and a second arm (7B) of the lever (7) extending on the other side of the second axis (8) and being driven in rotation about the second axis (8) by the rotation of the seat support (10) about the first axis (11).

3. The seat post assembly as claimed in claim 2, wherein the seat support (10) bears a pin (12) and wherein an oblong opening (13) is provided in the second arm (7B) of the lever (7), the oblong opening (13) and the seat support (10) being configured so that the pin (12) moves in and along the oblong opening (13) during the rotation of the seat support (10) about the first axis (11), the movement of the pin (12) in the oblong opening (13) making the lever (7) pivot about the second axis (8).

4. The seat post assembly as claimed in claim 3, wherein the pin (12) describes a circular path during the rotation of the seat support (10) about the first axis (11), and wherein the oblong opening (13) is curved in the same direction as the circular path, the curvature of the oblong opening (13) being less than the curvature of the circular path of the pin (12).

5. The seat post assembly as claimed in claim 2, wherein the seat support (10) bears a cam that is driven in rotation about the first axis (11) by the rotation of the seat support (10) about the first axis (11), and wherein the second arm (7B) of the lever (7) is pressed against an outer profile of the cam.

6. The seat post assembly as claimed in any one of claims 2 to 5, wherein the upper end (17A) of the link rod (17) passes through the first arm (7A) of the lever (7) and has, on either side of the first arm (7A), an upper stop (27A) and a lower stop (27B), the first arm (7A) being against the upper stop (27A) when the link rod (17) is in the high position and against the lower stop (27B) when the link rod (17) is in the low position.

7. The seat post assembly as claimed in any one of claims 1 to 6, wherein the blocking system (2) is in the locked position when the link rod (17) is in the high position, and is in the unlocked position when the link rod (17) is in the low position.

8. The seat post assembly as claimed in claim 7, wherein the seat support (10) is able to move in rotation about the first axis (11) between three positions, namely:
a bearing position, corresponding to the position of use of the saddle (18), in which the seat support (10) is the right way up, bearing on the base (6);
an inverted position in which the seat support (10) is tilted towards the rear of the base (6); and
an intermediate position between the bearing position and the inverted position, and
wherein the link rod (17) is:
in the high position when the seat support (10) is in the bearing position;
in the low position when the seat support (10) is in the intermediate position; and
once again in the high position when the seat support (10) is in the invert ed position.

9. The seat post assembly as claimed in any one of claims 1 to 8, wherein the blocking system (2) comprises:
a lower cone (32) connected to the lower end (17B) of the link rod (17);
an upper cone (33) fastened to the lower end (1B) of the seat post (1), the apexes of the lower and upper cones facing one another; and
a plurality of wedges (34) disposed circumferentially around the link rod (17), between the lower and upper cones (32, 33),
wherein, when the link rod (17) passes from its low position to its high position, the link rod (17) pulls the lower cone (32) upwards such that the lower and upper cones move closer together and clamp the wedges (34) between them, thus causing the wedges to move radially away from the link rod (17).

10. The seat post assembly as claimed in any one of claims 1 to 8, wherein the lower end (1B) of the seat post (1) is bevelled along an inclined plane (31) that forms a non-zero angle with a plane orthogonal to the main axis (X) of the seat post (1), wherein the blocking system (2) comprises a wedge (30) having an inclined surface (30A) facing the inclined plane (31), and wherein, when the link rod (17) passes from its low position to its high position, the link rod (17) pulls the wedge (30) upwards such that the inclined surface (30A) is pressed and slides against the inclined plane (22), thus causing the offsetting of the wedge (2) with respect to the main axis (X) of the seat post (1).

11. A vehicle comprising a seat post assembly as claimed in any one of claims 1 to 10, a frame with a seat tube (20) in which the seat post (1) is mounted so as to be able to slide, and a saddle (18) fastened to the seat support (10).
